# EUROPÄISCHE PATENTSCHRIFT

(11) **EP 0 560 206 B1**
(45) Veröffentlichungstag und Bekanntmachung des Hinweises auf die Patenterteilung: **12.02.1997**
(21) Anmeldenummer: 93103453.2
(22) Anmeldetag: 04.03.1993
(51) Int. Cl.: B65G 1/137

(54) **Kommissionierautomat zur automatischen Kommissionierung von Artikeln**
Retrieval system for the automatic selection of articles
Aménagement d'entrepôt pour le ramassage automatique d'articles

(30) Priorität: 11.03.1992 DE 9203273 U
(43) Veröffentlichungstag der Anmeldung: 15.09.1993
(73) Patentinhaber: P+P MATERIALFLUSS-SYSTEME GmbH, 90411 Nürnberg (DE)
(72) Erfinder: Wiltsche, Norbert, Dipl.-Ing., W-8228 Freilassing (DE)
(74) Vertreter: Hanke, Hilmar

(56) Entgegenhaltungen:
- EP-A- 0 369 060

## Beschreibung

Die Erfindung betrifft einen Kommissionierautomat zur automatischen Kommissionierung und Versandbereitstellung von Artikeln mit zwei parallelen, gegen die Vertikale leicht geneigten Magazinreihen, in denen die Artikel gestapelt sind, und mit Ausschiebern zum Ausschieben von stapeluntersten Artikeln quer zur Stapelerstreckung auf ein zwischen den Magazinreihen befindliches im wesentlichen horizontal verlaufendes Förderband.

Die gegenwärtig vorwiegend im Pharmagroßhandel eingesetzten bekannten Kommissionierautomaten erreichen eine Spitzenleistung von maximal 1200 gefüllten Behältern pro Stunde. Dies ist vor allem bedingt durch die Ausschiebegeschwindigkeit der Produkte. Die physikalischen Eigenschaften der Verpackungen der meisten Produkte lassen keine höhere Ausschieberate als 4 Stück pro Sekunde zu, ohne daß man eine Beschädigung der Verpackung riskiert. Herkömmliche Kommissionierautomaten der eingangs genannten, beispielsweise aus EP 0 213 360 A1 oder auch EP 0 369 060 A1 bekannten Art sind so aufgebaut, daß meist von beiden Seiten eines zentral durchlaufenden Förderbandes die Produkte aufgeschoben werden, und zwar in einer Form, daß die zu kommissionierenden Aufträge auf dafür reservierte Zonen aufgeschoben werden. Die Länge dieser Auftragszonen ist individuell verschieden und richtet sich nach der größten Auftragszeile in diesem Auftrag. Zwischen den Auftragszonen werden auf dem zentralen Förderband Abschnitte konstanter Länge vorgesehen, damit am Austragsende der Austausch eines bereits vollen Behälters gegen den nächsten leeren Behälter erfolgen kann. Dieser Bewegungsablauf erfordert im günstigsten Fall ca. 1 Sekunde, da sonst die Ware aus dem bereits gefüllten Behälter wieder herausschwappen könnte. Im Durchschnitt umfaßt die größte Zeile eines Auftrages im Pharmagroßhandel sechs Stück, was bei einer Ausschieberrate von 4 Stück pro Sekunde 1,5 Sekunden in Anspruch nimmt. Allerdings können die Produkte auf dem rasch vorbeilaufenden Förderband ungenau fallen, so daß eine gewisse Sicherheitszone einzurechnen ist. Alles in allem kann ein System als bereits sehr optimiert gelten, bei dem alle 3 Sekunden ein gefüllter Behälter den Kommissionierautomaten verläßt.

Aufgabe der Erfindung ist die Schaffung eines Kommissionierautomaten der eingangs genannten Art, bei dem mit Hilfe sehr einfacher Mittel und zuverlässigem Betrieb des Automaten die Kommissionierleistung erheblich gesteigert werden kann.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 11.

Die entscheidende neue Idee liegt im Einsatz nicht nur eines zwischen den Magazinreihen laufenden Förderbands, sondern darin, daß jeder Magazinreihe auf der äußeren Magazinlängsseite zumindest ein weiteres im wesentlichen horizontal verlaufendes Förderband zugeordnet ist, wobei "umkehrbare" Ausschieber vorgesehen sind, welche nicht nur in eine Richtung auf ein in der Mitte vorbeilaufendes Förderband aufschieben können, sondern im Bedarfsfall sowohl auf das innenliegende Band als auch auf das außenliegende weitere Förderband. Dadurch kann die gesamte Kommissionierleistung in guter Annäherung verdoppelt werden. Das mittlere der drei Förderbänder arbeitet in der eingangs beschriebenen bisher schon angewandten Weise und ergibt eine Kommissionierleistung von ca. 1200 Aufträgen pro Stunde. Auf einer zweiten (äußeren) Förderstrecke werden weitere 1200 Behälter pro Stunde gefüllt. Hierbei wird aus der einen der beiden parallel zueinander angeordneten Magazinreihen der erste Halbauftrag auf das dieser Magazinreihe zugeordnete äußere weitere Förderband kommissioniert und endseitig in den Behälter gefüllt. Zwei Etappen später wird demselben Behälter der zweite Teilauftrag vom anderen äußeren weiteren Förderband der anderen Magazinreihe hinzugefügt. Auf diese Art und Weise kann die Kommissionierleistung auf ein und demselben Kommissionierautomaten auf insgesamt ca. 2400 Aufträge pro Stunde gesteigert werden. Wichtig dabei ist, daß dabei nur ein einziger Lagerplatz pro Artikel eingerichtet werden muß. Theoretisch ist es denkbar, daß die Leistung auch verdoppelt werden kann, indem man die gesamte Lagerorganisation verdoppelt. Dies ist aus Kosten- und aus Platzgründen jedoch nicht sinnvoll.

Der neuen Erfindungsidee kommt insbesondere Bedeutung zu, als gerade im Pharmagroßhandel eine Konzentrationsbewegung zu beobachten ist und die Lager immer größer werden. Dadurch fahren viele der bekannten Kommissionierautomaten mit 1200 Behältern pro Stunde bereits an deren Kapazitätsobergrenze.

Die Erfindung wird nachfolgend anhand eines Ausführungsbeispiels unter Bezugnahme auf die beigefügte Zeichnung näher erläutert; es zeigen:

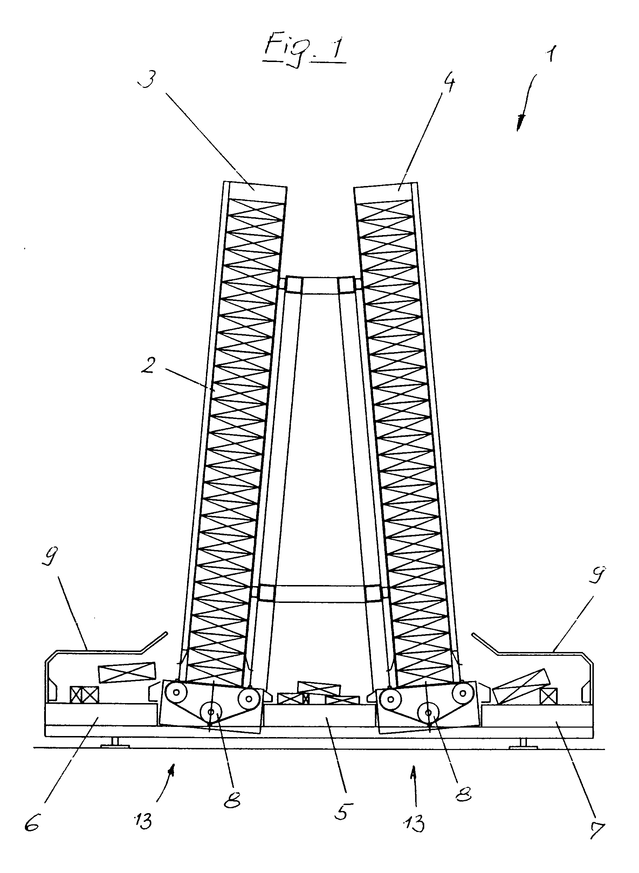

- Fig. 1: einen Kommissionierautomaten in einem schematischen vertikalen Querschnitt,
- Fig. 2: den Kommissionierautomaten nach Fig. 1 in einer schematischen Teildraufsicht, und

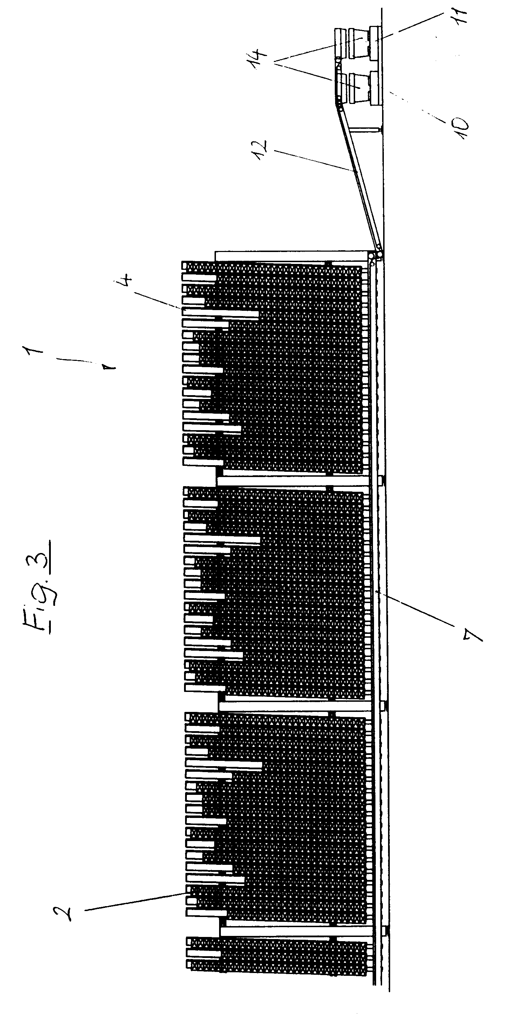

- Fig. 3: den Kommissionierautomaten nach den Fig. 1 und 2 in einer schematischen Teilseitenansicht.

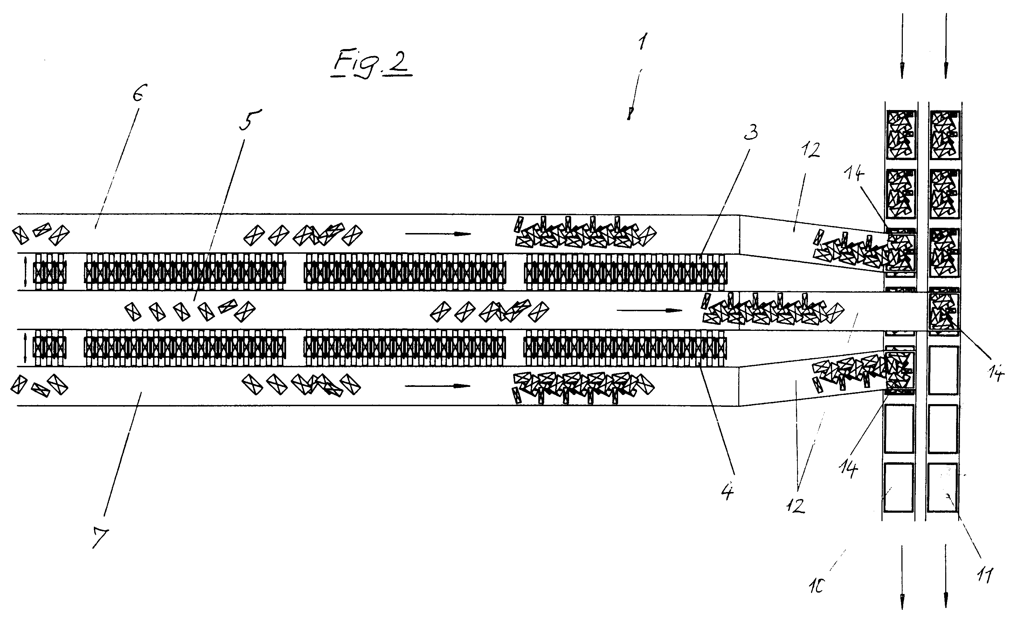

Gemäß Zeichnung umfaßt der Kommissionierautomat 1 zur automatischen Kommissionierung und Versandbereitstellung von Artikeln 2 zwei parallele, gegen die Vertikale leicht geneigte Magazinreihen 3 und 4, in denen die Artikel 2 gestapelt sind. An unterster Stelle eines jeden Artikelstapels befindet sich ein mechanisch betriebener Ausschieber mit einem Transmissionsriementrieb, welcher jeweils einen stapeluntersten Artikel quer zur Stapelerstreckung in der Ebene der Fig. 2 ausschieben kann. Neben stationären Ausschiebern 13 können für einige Artikelstapel auch noch positionierbare Ausschieber vorgesehen sein, wobei ein einziger positionierbarer Ausschieber für mehrere nebeneinanderliegende Artikelstapel vorgesehen ist.

Zwischen den beiden Magazinreihen 3 und 4 befindet sich etwa in Bodenhöhe ein im wesentlichen horizontal verlaufendes innenliegendes Förderband 5, wobei ferner sowohl der ersten Magazinreihe 3 als auch der zweiten Magazinreihe 4 jeweils ein weiteres erstes Förderband 6 bzw. ein weiteres zweites Förderband 7 auf der zugehörigen äußeren Magazinlängsseite zugeordnet sind. Sämtliche Förderbänder 5 bis 7 verlaufen im wesentlichen planparallel zueinander in Bodenhöhe des Kommissionierautomaten.

Die weiteren ersten und zweiten Förderbänder 6, 7 besitzen eine obere Abdeckung 9, welche als Trittstufe für ein Bedienungspersonal ausgebildet ist. Mithin kann eine Bedienungsperson auf die Trittstufe treten und von dort die Artikelstapel mit weiteren Artikeln manuell auffüllen.

Den vorgenannten Förderbändern 5 bis 7 schließen sich ausgangsseitig weitere zugeordnete schräg nach oben verlaufende Verbindungsförderbänder 12 an, welche über querverlaufenden Austragsförderstrecken 10 und 11 endigen, welche mit Artikelaufnahmebehältern 14 bestückt sind. Im besonderen ist das zentrale Förderband 5 bzw. dessen zugeordnetes Verbindungsförderband an eine erste Austragsförderstrecke 11 angeschlossen, während die weiteren ersten und zweiten Förderbänder 6 und 7 bzw. deren Verbindungsförderbänder an eine gemeinsame Austragsförderstrecke 11 angeschlossen ist, welche in Bodenhöhe parallel zur ersten Austragsförderstrecke 11 verläuft, wie dies in Fig.2 veranschaulicht ist.

Sämtliche Förderbänder 5 bis 7 einschließlich der zugehörigen Verbindungsförderbänder 12 sind kontinuierlich durch einen gemeinsamen zentralen (nicht veranschaulichten) Antrieb angetrieben.

Die einzelnen Ausschieber 13 besitzen jeweils einen Umkehrantrieb 8, um kommissionierte Artikel nicht nur auf das zentrale innenliegende Förderband 5 quer zur Stapelerstreckung aufzuschieben, sondern auch im Bedarfsfall auf das zugeordnete äußere weitere Förderband 6 bzw. 7, wobei dann der Ausschieber umgekehrt angetrieben ist, wie dies durch beidseitige Pfeile in Fig. 2 links dargestellt ist.

Bei entsprechender (elektronischer) Steuerung der beidseits betreibbaren Ausschieber 13 können von einem einzigen Ausschieber der ersten Magazinreihe 3 sowohl das zentrale Förderband 5 als auch das zugeordnete äußere weitere erste Förderband 6 mit Artikeln bedient werden, während die Ausschieber 13 der zweiten Magazinreihe 4 das zentrale Förderband 5 und das andere weitere Förderband 7 bedienen.

Da die beiden äußeren weiteren Förderbänder 6 und 7 an eine gemeinsame Austragsförderstrecke 10 angeschlossen sind, können dort auf jedem äußeren Förderband 6 und 7 ein Halbauftrag ausgeführt werden. Der Halbauftrag des ersten weiteren Förderbandes 6 wird über das zugeordnete Verbindungsförderband 12 in einen dort positionierten Artikelaufnahmebehälter 14 gekippt. Wird dann dieser den Halbauftrag enthaltende Artikelaufnahmebehälter 14 um zwei Takte längs der gemeinsamen Austragsförderstrecke 10 in Pfeilrichtung vorwärtsbewegt, kann vom zweiten äußeren Förderband 7 die dortige zweite Auftragshälfte in Form von Artikeln aufgenommen werden.

Innenlaufende Förderbänder 5 können auch an höherer Stelle zwischen den beiden Magazinreihen 3 und 4 vorgesehen und an den gemeinsamen Antrieb angeschlossen sein. Entsprechend können auch magazinaußenseitig höher gelegene weitere erste und zweite Förderbänder 6 und 7 vorgesehen sein.

## Patentansprüche

1. Kommissionierautomat (1) zur automatischen Kommissionierung und Versandbereitstellung von Artikeln (2) mit zwei parallelen, gegen die Vertikale leicht geneigten Magazinreihen (3, 4), in denen die Artikel (2) gestapelt sind, und mit Ausschiebern (13) zum Ausschieben von stapeluntersten Artikeln quer zur Stapelerstreckung auf ein zwischen den Magazinreihen (3, 4) im wesentlichen horizontal verlaufendes Förderband (5),
dadurch gekennzeichnet,
daß jeder Magazinreihe (3, 4) auf der äußeren Magazinlängsseite zumindest ein weiteres im wesentlichen horizontal verlaufendes Förderband (6 bzw. 7) zugeordnet ist, und daß die Ausschieber (13) zwecks Beschickung des weiteren Förderbandes (6 bzw. 7) in der anderen Richtung quer zur Stapelerstreckung einen Umkehrantrieb (8) aufweisen.

2. Kommissionierautomat nach Anspruch 1,
dadurch gekennzeichnet,
daß die weiteren Förderbänder (6, 7) im Bodenbereich des Kommissionierautomaten liegen.

3. Kommissionierautomat nach Anspruch 2,
dadurch gekennzeichnet,
daß die weiteren Förderbänder (6, 7) eine obere Abdeckung (9) besitzen, welche als Trittstufe für ein Bedienungspersonal des Kommissionierautomaten ausgebildet ist.

4. Kommissionierautomat nach einem der Ansprüche 1 bis 3,
dadurch gekennzeichnet,
daß ein zentraler Antrieb für sämtliche Förderbänder (5, 6, 7) vorgesehen ist.

5. Kommissionierautomat nach einem der Ansprüche 1 bis 4,
dadurch gekennzeichnet,
daß die weiteren Förderbänder (6 bzw. 7) jeder Magazinreihe (3 bzw. 4) einer gemeinsamen querverlaufenden Austragförderstrecke (10) zugeordnet sind, welche parallel zur benachbarten ersten Austragförderstrecke (11) des Förderbandes (5) verläuft, welches zwischen den Magazinreihen (3, 4) angeordnet ist.

6. Kommissionierautomat nach Anspruch 5,
dadurch gekennzeichnet,
daß die beiden parallelen Austragförderstrecken (10, 11) in Bodenhöhe des Kommissionierautomaten liegen.

7. Kommissionierautomat nach einem der Ansprüche 1 bis 6,
dadurch gekennzeichnet,
daß auf den Austragförderstrecken (10, 11) Artikelaufnahmebehälter (14) positioniert und diese mittels einer Steuereinrichtung vorbeigetaktet sind.

8. Kommissionierautomat nach einem der Ansprüche 1 bis 7,
dadurch gekennzeichnet,
daß die Förderbänder (5 bzw. 6, 7) rampenartig über schräge Verbindungsförderbänder (12) mit den zugeordneten Austragförderstrecken (10 bzw. 11) verbunden sind.

9. Kommissionierautomat nach einem der Ansprüche 1 bis 8,
dadurch gekennzeichnet,
daß der Umkehrantrieb (8) der Ausschieber (13) einen Transmissionsriementrieb aufweist.

10. Kommissionierautomat nach einem der Ansprüche 1 bis 9,
dadurch gekennzeichnet,
daß zumindest einigen Artikelstapeln einzelne stationäre Ausschieber (13) zugeordnet sind.

11. Kommissionierautomat nach einem der Ansprüche 1 bis 10,
dadurch gekennzeichnet,
daß zumindest einigen Artikelstapeln ein einziger mobiler positionierbarer Ausschieber zugeordnet ist.

## Claims

1. Order picking A-frame (1), for the automated order picking and supply for dispatch of items (2), with two parallel, slightly towards the vertical line inclined rows of magazine channels (3,4) in which the items (2) are stacked and with ejectors (13) to eject the bottom item in the magazine channel horizontally to the stack extension onto a in general horizontal conveying belt (5) running between the two rows of magazine channels (3,4),
characterised through the feature that
at least one additional basically horizontal conveying belt (6 or respectively 7) has been allocated to each row of magazine channels (3, 4) at the outer side wall of the magazine channels and that the ejectors (13) have a reverse driving unit for ejecting items to the other direction horizontally to the stack extension onto the additional conveying belt (6 or respectively 7).

2. Order picking A-frame according to claim 1,
characterised through the feature that
the additional conveying belts (6, 7) are located in the bottom area of the order picking A-frame.

3. Order picking A-frame according to claim 2,
characterised through the feature that
the additional conveying belts (6, 7) have a upper covering (9) which has been designed to serve as a step for the operating personnel of the order picking A-frame.

4. Order picking A-frame according to one of the claims 1 to 3,
characterised through the feature that
a central driving unit planned to design for all conveying belts (5, 6, 7)

5. Order picking A-frame according to one of the claims 1 to 4,
characterised through the feature that
the additional conveying belts (6 or respectively 7) of each row of magazine channels (3 or respectively 4) are allocated to a common horizontally running discharge conveyor track (10) which is running in parallel to the adjacent first discharge conveyor track (11) of the conveyor belt (5) located between the rows of magazine channels (3,4).

6. Order picking A-frame according to claim 5,
characterised through the feature that
the two parallel discharge conveyor tracks (10, 11) are located in the bottom area of the order picking A-frame.

7. Order picking A-frame according to one of the claims 1 to 6,
characterised through the feature that
item collecting / receiving boxes are positioned on the discharge conveyor tracks (10, 11) and these boxes pass in cycles controlled by a control device.

8. Order picking A-frame according to one of the claims 1 to 7,
characterised through the feature that
the conveying belts (5 or respectively 6, 7) are linked with the allocated discharge conveyor tracks (10 or respectively 11) like a ramp by means of inclined connecting conveyor belts (12).

9. Order picking A-frame according to one of the claims 1 to 8,
characterised through the feature that
the reverse driving unit (8) of the ejectors (13) shows properties of a transmission driving belt.

10. Order picking A-frame according to one of the claims 1 to 9,
characterised through the feature that
single fixed ejectors (13) are allocated at least to some of the item stacks.

11. Order picking A-frame according to one of the claims 1 to 10,
characterised through the feature that
one single mobile and positionable ejector is allocated to at least some of the item stacks.

## Revendications

1. Automate de préparation de commandes (1) pour la préparation et la mise à la disposition automatique de produits (2) avec deux rangées parallèles de magasins (3, 4) étant légèrement inclinées vers la verticale dans lesquels sont empilés les produits (2) et avec éjecteurs (13) pour l'éjection des produits les plus bas dans les piles transversalement à l'extension des piles sur une bande transporteuse essentiellement horizontale (5) se trouvant entre les rangées de magasins (3, 4),
étant marqué par la caractéristique qu'
au moins une bande transporteuse additionnelle essentiellement horizontale (6 ou respectivement 7) est attribuée à chaque rangée de magasins (3, 4) sur le grand côté extérieur des magasins et que les éjecteurs (13) possèdent un entraînement inverse (8) pour l'éjection de produits sur la bande transporteuse additionnelle (6 ou respectivement 7) dans l'autre direction aussi transversalement à l'extension des piles.

2. Automate de préparation de commandes selon droit numéro 1,
étant marqué par la caractéristique que
les bandes transporteuses additionnelles (6, 7) se trouvent dans la partie près du fond de l'automate de préparation de commandes.

3. Automate de préparation de commandes selon droit numéro 2,
étant marqué par la caractéristique que
les bandes transporteuses additionnelles (6, 7) possèdent un recouvrement supérieur qui est conçu de façon à ce qu'il puisse être utilisé en tant que marchepied par l'opérateur en charge de l'automate de préparation de commandes.

4. Automate de préparation de commandes selon un des droits numéro 1 à 3,
étant marqué par la caractéristique qu'
un entraînement central est prévu pour toutes les bandes transporteuses (5, 6, 7).

5. Automate de préparation de commandes selon un des droits numéro 1 à 4,
étant marqué par la caractéristique que
les bandes transporteuses additionnelles (6 ou respectivement 7) de chaque rangée de magasins (3 ou respectivement 4) sont attribuées à une bande transporteuse de déchargement commune transversale (10) qui est parallèle à la première bande transporteuse de déchargement (11) voisine de la bande transporteuse (5) se trouvant entre les rangées de magasins (3, 4).

6. Automate de préparation de commandes selon droit numéro 5,
étant marqué par la caractéristique que
les deux bandes transporteuses de déchargement parallèles (10, 11) se trouvent dans la partie près du fond de l'automate de préparation de commandes.

7. Automate de préparation de commandes selon un des droits numéro 1 à 6,
étant marqué par la caractéristique que
des boîtes de réception de produits (14) sont positionnées sur les bandes transporteuses de déchargement (10, 11) et que ces boîtes passent en cycles contrôlés par un dispositif de contrôle.

8. Automate de préparation de commandes selon un des droits numéro 1 à 7,
étant marqué par la caractéristique que
les bandes transporteuses (5, 6, 7) sont connectées de façon similaire à une rampe avec les bandes transporteuses de déchargement (10 ou respectivement 11) attribuées par moyen de bandes transporteuses de connexion inclinées.

9. Automate de préparation de commandes selon un des droits numéro 1 à 8,
étant marqué par la caractéristique que
l'entraînement inverse (8) des éjecteurs (13) montre les caractéristiques d'un entraînement de transmission par courroie .

10. Automate de préparation de commandes selon un des droits numéro 1 à 9,
étant marqué par la caractéristique que
des éjecteurs stationnaires individuels (13) sont attribués au moins à quelques-unes des piles de produits.

11. Automate de préparation de commandes selon un des droits numéro 1 à 10,
étant marqué par la caractéristique qu'
un seul éjecteur mobile qui peut être positionné est attribué au moins à quelques-unes des piles de produits.
